# EUROPÄISCHE PATENTANMELDUNG

(11) **EP 2 154 478 A1**
(43) Veröffentlichungstag der Anmeldung: **17.02.2010**
(21) Anmeldenummer: 09009516.7
(22) Anmeldetag: 22.07.2009
(51) Int. Cl.: G01C 21/00, G06Q 10/00

(54) **Verfahren zur Fahrerunterstützung bei einem Flurförderzeug**

(30) Priorität: 05.08.2008 DE 102008036412
(71) Anmelder: STILL GmbH, 22113 Hamburg (DE)
(72) Erfinder: Fromme, Georg Dr., 22145 Hamburg (DE)
(74) Vertreter: Geirhos, Johann

(57) **Zusammenfassung**

Bei einem Verfahren zur Fahrerunterstüizung bei einem Flurförderzeug (7), das eine Ortungsvorrichtung zur Ermittlung der Position des Flurförderzeugs (7), eine Anzeigevorrichtung zur Darstellung von Informationen für den Fahrer und einen mit der Ortungsvorrichtung und der Anzeigevorrichtung verbundenen Steuerungscomputer aufweist, werden in einem ersten Schritt eine anzufahrende Zielposition (10) durch den Steuerungscomputer empfangen, in einem zweiten Schritt die Position des Flurförderzeugs (7) durch die Ortungsvorrichtung bestimmt, in einem dritten Schritt ein optimaler Anfahrweg (9) zu der Zielposition (10) durch den Steuerungscomputer berechnet und schließlich der Anfahrweg (9) und/oder Anweisungen über die Fahrtrichtung durch die Anzeigevorrichtung angezeigt.

## Beschreibung

Die vorliegende Erfindung betrifft ein Verfahren zur Fahrerunterstützung bei einem Flurförderzeug. Insbesondere betrifft die Erfindung ein Verfahren zur Fahrerunterstützung bei einem Flurförderzeug, das eine Ortungsvorrichtung aufweist und eine Anzeigevorrichtung hat, mit der Informationen für den Fahrer dargestellt werden können. Weiter betrifft die vorliegende Erfindung ein Flurförderzeug, auf dem das Verfahren zur Anwendung kommt, sowie ein Lagersystem mit Flurförderzeugen, bei dem das Verfahren zur Anwendung kommt.

Flurförderzeuge, insbesondere Gabelstapler, die von Personen bedient und gelenkt werden, kommen in unterschiedlichen Lagern und Betriebsgeländen zum Einsatz, die sich in einem großen Ausmaß voneinander unterscheiden. Beispielsweise sind die Art sowie auch die räumlichen Abmessungen des Transportgutes sehr unterschiedlich und je nach Art des Lagers und des Unternehmens, das das Lager betreibt, ist auch die Häufigkeit des Einlagerns bzw. Auslagerns des Transportgutes sehr unterschiedlich.

Hieraus ergeben sich Folgen für den Aufbau und die Struktur des Lagers. So sind die Fahrwege und Lagergassen unterschiedlich gestaltet, zum einen schmal, bei einem anderen Lagern breit, es kommt zu stark unterschiedlichen Ausbildungen von Engstellen und Fahrwegkreuzungen, insbesondere auch abhängig von den örtlichen Gegebenheiten des Gebäudes oder Betriebsgeländes.

Neben dem bekannten Verfahren, einem Fahrer eines Gabelstaplers den jeweils nächsten Transportauftrag mündlich oder durch ein schriftliches Auftragsblatt zu übermitteln ist bereits bekannt, dem Fahrer den nächsten Transportauftrag über ein Lagerverwaltungssystem drahtlos auf den Gabelstapler zu übermitteln und auf einem entsprechenden Anzeigegerät anzuzeigen. Der Fahrer fährt dann die von dem Transportauftrag abhängige Zielposition an und sucht sich dabei den Anfahrweg aus seiner Ortskenntnis heraus und unter Berücksichtigung eventuell im Weg stehende Hindernisse oder weiterer Fahrzeuge.

Nachteilig an diesem Stand der Technik ist, dass ortsunkundige Fahrer ein Anfahrziel beispielsweise anhand von Gassen- oder Lagerplatzkennzeichnungen erst suchen müssen und die Gefahr besteht, dass sich die Fahrer verfahren. Des Weiteren erfordert das Suchen des richtigen Anfahrwegs zusätzliche Aufmerksamkeit und Konzentration, beispielsweise an Kreuzungen, Tordurchfahrten, Engstellen und unübersichtlichen Stellen, um den weitern Weg zu finden, aber auch um zu vermeiden, dass es hinter unübersichtlichen Stellen zu einer Kollision mit weiteren, in dem Lager fahrenden Gabelstaplern kommt. Dies führt zu einer schnellen Ermüdung und zu der Gefahr, dass es zu Unglücksfällen durch menschliches Versagen eines Fahrers kommt.

Schließlich kommt es zu Wartezeiten, wenn der vorgegebene Transportauftrag zu einer Zielposition führt, an der bereits ein weiterer Gabelstapler oder ein Flurförderzeug im Einsatz ist und die daher für einen gewissen Zeitraum nicht zugänglich ist.

Weiter ist bekannt, die Position eines Flurförderzeugs, insbesondere eines autonom fahrenden Gabelstaplers, durch eine Ortungsvorrichtung auf dem Flurförderzeug festzustellen, die entweder die Umgebung optisch erfasst und aus Bildern oder der Erkennung von festen Markierungen in der Umgebung die Position des Flurförderzeugs bestimmt, oder mit Hilfe von Funksignalen, die von Empfängern, etwa RFID-Transpondern, zurückgesendet werden, bestimmt. Die Ortungsvorrichtung kann auch in offenen, nicht in einer Halle befindlichen Bereichen, Satellitennavigationssysteme nutzen.

Aus der DE-44 29 016 A1 ist eine Ortsbestimmung von fahrerlosen Fahrzeugen insbesondere von Transportsystemen in Hallen bekannt, bei der Umgebungsmarken erfasst werden und zur Bestimmung der Position des Fahrzeuges herangezogen werden. Dabei werden kontrastreiche Objekte in der Umgebung aufgenommen und aus diesen Lageposition und Lagewinkel des Fahrzeuges bestimmt. Aufgenommene Bilder werden mit einer bekannten, vorher vermessenen Karte des Objekts verglichen.

Nachteilig an diesem Stand der Technik ist, dass er dem Fahrer keine Hilfe bietet, die oben geschilderten Nachteile zu vermeiden.

Aus der DE10 2006 038 856 A1 ist ebenfalls eine Vorrichtung und ein Verfahren zur Positions- und/oder Geschwindigkeitsbestimmung für u.a. einen Gabelstapler bekannt, bei der absolute Laufzeiten und Laufzeitunterschiede von Signalen genutzt werden.

Auch dieser Stand der Technik bietet keine Lösung für die oben genannten Nachteile.

Es ist daher Aufgabe der vorliegenden Erfindung, ein Verfahren zur Fahrerunterstützung bei einem Flurförderzeug zur Verfügung zu stellen, mit dem für den Fahrer das Auffinden einer Zielposition für einen Transportauftrag erleichtert wird und durch das in einem Lagersystem die Fahrwege von Flurförderzeugen optimiert werden.

Diese Aufgabe wird durch ein Verfahren zur Fahrerunterstützung bei einem Flurförderzeug nach Anspruch 1 sowie durch ein Flurförderzeug nach Anspruch 8 und einem Lagersystem nach Anspruch 9 gelöst. Die Unteransprüche geben vorteilhafte Weiterbildungen der Erfindung an.

Die Aufgabe wird erfindungsgemäß durch ein Verfahren zur Fahrerunterstützung bei einem Flurförderzeug, das eine Ortungsvorrichtung zur Ermittlung der Position des Flurförderzeugs, eine Anzeigevorrichtung zur Darstellung von Informationen für den Fahrer und einen mit der Ortungsvorrichtung und der Anzeigevorrichtung verbundenen Steuerungscomputer aufweist, gelöst. Dabei wird in einem ersten Schritt durch den Steuerungscomputer eine anzufahrende Zielposition empfangen, sodann in einem zweiten Schritt die Position des Flurförderzeugs durch die Ortungsvorrichtung bestimmt und in einem dritten Schritt ein Anfahrweg zu der Zielposition durch den Steuerungscomputer bestimmt. In einem vierten Schritt wird der Anfahrweg und/oder eine Anweisung über die einzuschlagende Fahrtrichtung durch die Anzeigevorrichtung angezeigt. Dabei werden die Schritte zwei bis vier bis zum Erreichen des Zielpunkts wiederholt.

Vorteilhaft kommt es dadurch zu einer Optimierung des Anfahrwegs, da der kürzeste bzw. schnellste Anfahrweg zu der Zielposition bestimmt wird. Insbesondere sind keine Ortskenntnisse des Fahrers erforderlich und es kann erheblich Zeit eingespart werden, die nötig ist, um zunächst die entsprechende Ortskenntnis, vor allem bei großen Betriebsflächen und Lagerbereichen, zu erwerben. Somit können Flurförderzeuge viel flexibler mit Fahrern eingesetzt werden, die gerade erst ihre Tätigkeit aufgenommen haben, oder in einen anderen Bereich des Betriebes normalerweise tätig sind. Weiterhin können Beschilderungen und Regelungen des Fahrverkehrs von Flurförderzeugen vor Ort eingespart werden, indem beispielsweise in dem Verfahren vorgegeben wird, dass eine bestimmte Lagergasse oder eine bestimmte Fahrstrasse nur in einer Richtung durchfahren wird und daher kein Schild nötig ist, das diese Fahrstrasse als Einbahnstrasse ausweist.

In günstiger Ausführungsform weist das Flurförderzeug eine Sende-/Empfangseinrichtung auf, über die Daten mit einem Lagerverwaltungssystem ausgetauscht werden können. Die anzufahrende Zielposition kann von dem Lagerverwaltungssystem an den Steuerungscomputer übertragen werden.

Dadurch ist es möglich, die Fahrwege der Flurförderzeuge in einem Lagerbereich zu optimieren, da das Lagersystem jeweils abhängig von der aktuellen Position des Flurförderzeugs bzw. Gabelstaplers, einen optimalen Transportauftrag diesem Flurförderzeug zuordnet. Alternativ ist jedoch auch eine Vorgehensweise wie herkömmlich denkbar, bei der der Fahrer den Transportauftrag mündlich oder per Auftragszettel bekommt und der Zielpunkt auf dem Flurförderzeug selbst eingegeben wird.

In einer günstigen Ausführungsform werden durch das Lagerverwaltungssystem an den Steuerungscomputer Informationen über die Position weiterer Flurförderzeuge übermittelt und, wenn ein weiteres Flurförderzeug sich auf dem Anfahrweg befindet, ein alternativer Anfahrweg berechnet. Alternativ kann ein Hinweis oder eine Warnung bezüglich der Position des weiteren Flurförderzeuges angezeigt werden oder etwa akustisch erfolgen.

Insbesondere an unübersichtlichen Stellen wie Kreuzungen, an Tordurchfahrten oder Engstellen so wie etwa beim Fahren um eine Ecke in eine Lagergasse oder ähnlichen Situationen kann dadurch eine Warnung für den Fahrer erfolgen, dass sich hinter der nicht einsehbaren Stelle auf seinem Fahrweg ein weiteres Flurförderzeug befindet. Dadurch wird die Gefahr von Kollisionen und Unfällen erheblich herabgesetzt.

Soweit dies aufgrund der Gegebenheiten des Lagers möglich ist, kann auch alternativ oder gleichzeitig die Berechnung einer Ausweichanfahrtstrecke erfolgen und dadurch eine Wartezeit, bis der Anfahrweg wieder frei ist, vermieden werden und die Bearbeitungsgeschwindigkeit der Transportaufträge optimiert werden. Solche Warnungen und Hinweise können alternativ auch durch das Lagerverwaltungssystem anstatt durch den Steuerungscomputer erzeugt werden und lediglich auf dem Flurförderzeug dargestellt werden.

In einer günstigen Ausführungsform werden durch das Lagerverwaltungssystem an den Steuerungscomputer Informationen über die Position von abgestellten Transportgütern übermittelt und die Position dieser Transportgüter wird bei der Berechnung des Anfahrweges berücksichtigt.

Dadurch wird eine stets aktualisierte Karte des Betriebsgeländes oder Lagerbereiches erstellt und durch abgestellte Transportgüter bestehende Hindernisse können bei der Berechnung des Anfahrweges berücksichtigt werden. Besondere Vorteile ergeben sich hierbei bei Lagern, bei denen die Transportgüter auf freien Flächen und nicht in Regalen abgestellt werden. Wenn hier durch nicht genutzte Lagerflächen freie Wege entstehen, sind zum Teil erhebliche Verkürzungen von Fahrtwegen möglich.

In einer günstigen Ausführungsform wird durch das Lagerverwaltungssystem abhängig von den Positionen weiterer Flurförderzeuge eine anzufahrende Zielposition an den Steuerungscomputer übermittelt.

Dadurch kann eine Optimierung des Umschlags an Transportgütern pro Zeit erreicht werden, da Wartezeiten reduziert werden können. Wenn sich herausstellt, dass bereits ein anderes Flurförderzeug so im Einsatz ist, dass es an dem Zielpunkt des Transportauftrages ein Einlagern oder Auslagern verhindern oder zumindest verzögern würde, so kann das Lagerverwaltungssystem einen alternativen Transportauftrag übermitteln, bei dem die momentane Position des Flurförderzeugs, wie auch eine möglichst geringe gegenseitige Behinderung der Flurförderzeuge, die insgesamt im Einsatz sind, berücksichtigt wird. Durch die Darstellung eines berechneten, optimierten Anfahrwegs für diesen neuen Transportauftrag, ist ein solcher Wechsel des Transportauftrages sehr flexibel und kurzfristig möglich.

Der Steuerungscomputer kann eine Karte des Fahrbereichs des Flurförderzeugs abgespeichert haben.

Die Aufgabe wird erfindungsgemäß auch durch ein Flurförderzeug gelöst, das eine Ortungsvorrichtung zur Ermittlung der Position des Flurförderzeugs, eine Anzeigevorrichtung zur Darstellung von Informationen für den Fahrer und einen mit der Ortungsvorrichtung und der Anzeigevorrichtung verbundenen Steuerungscomputer aufweist, wobei auf diesem Flurförderzeug ein Verfahren, wie es zuvor beschrieben wurde, durchgeführt wird.

Die Erfindungsgemäße Aufgabe wird ebenfalls auch durch ein Lagersystem mit einem Lager gelöst, das ein Lagerverwaltungssystem und zumindest ein Flurförderzeug aufweist, wobei das Lagerverwaltungssystem und das Flurförderzeug ein zuvor beschriebenes Verfahren durchführt.

Ein solches Lager kann im Durchsatz an Transportgütern erheblich optimiert werden, da ein zentrales Lagerverwaltungssystem, z.B. umgesetzt durch ein Computernetzwerk und entsprechende Software, durch die automatisierte Vorgabe von Transportaufträgen, wobei gleichzeitig eine Wegführung für den Fahrer des Flurförderzeugs stattfindet, Lehrfahrten, Umwegfahrten und ähnliches vermeiden kann.

In vorteilhafter Ausführungsform werden bei einem Lagersystem Informationen über die Position von Flurförderzeugen von dem Flurförderzeug an das Lagerverwaltungssystem übertragen, um Lagereinrichtungen zu bedienen, insbesondere z.B. Tore.

Dadurch kann ein selbsttätig öffnendes und schließendes Tor bei der Annährung eines fahrenden Flurförderzeugs in Abhängigkeit von der Fahrgeschwindigkeit und dem Abstand des Flurförderzeugs optimal geöffnet werden, so dass das Flurförderzeug seine Geschwindigkeit nicht reduzieren muss, und andererseits eine zu lange Öffnungszeit des Tores vermieden wird. Dies kann insbesondere wichtig sein, wenn dieses Tor etwa das Tor zu einem Tiefkühllager ist und Energieverluste vermieden werden sollen, wie sie während der Öffnungszeit des Tors auftreten.

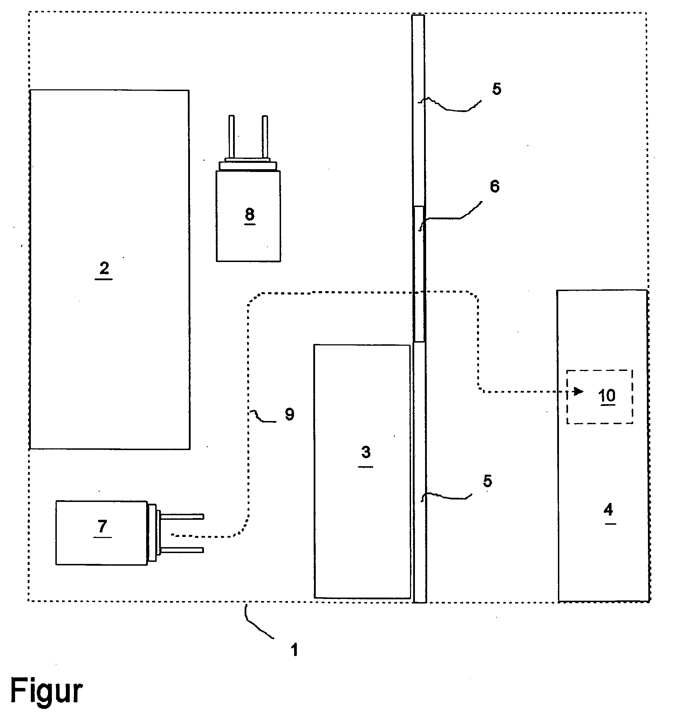

Weitere Vorteile und Einzelheiten der Erfindung werden anhand des in der schematischen Figur dargestellten Ausführungsbeispiels des erfindungsgemäßen Verfahrens näher erläutert. Dabei zeigt die Figur schematisch in Aufsicht ein Lagersystem.

In der Figur ist in der Sicht von oben schematisch ein Lagerbereich 1 eines Lagersystems dargestellt, der durch die gestrichelte Linie begrenzt ist. Der Lagerbereich 1 weist ein erstes Lagerregal 2, ein zweites Lagerregal 3, und ein drittes Lagerregal 4 auf. Der Aufstellungsbereich des ersten Lagerregals 2 und des zweiten Lagerregals 3 ist von dem Aufstellungsbereich des dritten Lagerregals 4 durch eine Trennwand 5 abgetrennt, durch die eine Tor 6 als Fahrweg hindurchführt. In dem Lagerbereich 1 bewegt sich ein erstes Flurförderzeug in Form eines ersten Gabelstaplers 7 und ein zweites Flurförderzeug in Form eines zweiten Gabelstaplers 8. Wenn nun der Fahrer des ersten Gabelstaplers 7 von einem hier nicht dargestellten Lagerverwaltungssystem per drahtloser Funkübertragung einen neuen Transportauftrag erhält, so berechnet ein ebenfalls nicht dargestellter Steuerungsrcomputer des ersten Gabelstaplers 7 einen durch einen gestrichelten Pfeil dargestellten Anfahrweg 9 zu einem Zielpunkt 10 des Transportauftrages in dem dritten Lagerregal 4, hier als Abstellplatz gestrichelt dargestellt. Der Fahrer erhält dabei in einer Anzeigevorrichtung eine Darstellung des Anfahrwegs 9, z.B. in Form der hier vorliegenden schematischen Darstellung der Figur, und wird dadurch, noch bevor er um die Ecke des ersten Lagerregals 2 biegt, darauf hingewiesen, das der zweite Gabelstapler 8 in seinem Fahrweg liegt.

Alternativ kann eine Lenkung des Fahrers auch dadurch erfolgen, dass akustisch Hinweise gegeben werden, in welche Richtung gelenkt werden soll, oder das grafisch dargestellt wird, etwa durch Pfeile und Entfernungsangaben, wie abgebogen werden soll.

Bei der Annährung an das Tor 6 wird dieses so optimiert von dem Lagersystem angesteuert und geöffnet, dass der erste Gabelstapler 7 seine Fahrgeschwindigkeit nicht reduzieren muss und es zu keiner Zeitverzögerung kommt. Wenn daher etwa der Lagerbereich, in dem das dritte Lagerregal 4 sich befindet, ein gekühlter Lagerbereich ist, werden dadurch die Öffnungszeiten des Tors 6 optimiert und es kommt zu einem verringerten Energieverlust.

Die Ortserkennung des ersten Gabelstaplers 7 kann durch bekannte Methoden der drahtlosen Positionsbestimmung, der optischen Umgebungserfassung erfolgen, aber auch alternativ durch ein Weiterberechnen der zurückgelegten Fahrstrecke und Berücksichtigung der dabei verwendeten Lenkwinkel.

## Patentansprüche

1. Verfahren zur Fahrerunterstützung bei einem Flurförderzeug (7), das eine Ortungsvorrichtung zur Ermittlung der Position des Flurförderzeugs (7), eine Anzeigevorrichtung zur Darstellung von Informationen für den Fahrer und einen mit der Ortungsvorrichtung und der Anzeigevorrichtung verbundenen Steuerungscomputer aufweist, mit den folgenden Schritten:
a. Empfangen einer anzufahrenden Zielposition (10) durch den Steuerungscomputer,
b. Bestimmen der Position des Flurförderzeugs (7) durch die Ortungsvorrichtung,
c. Berechnen eines optimalen Anfahrwegs (9) zu der Zielposition (10) durch den Steuerungscomputer, und
d. Anzeigen des Anfahrweges (9) und/oder von Anweisungen über die Fahrtrichtung durch die Anzeigevorrichtung,
wobei die Schritte b. bis d. bis zum Erreichen der Zielposition (10) wiederholt werden.

2. Verfahren nach Anspruch 1,
**dadurch gekennzeichnet,**
**dass** das Flurförderzeug (7) eine Sende-/Empfangseinrichtung aufweist, über die Daten mit einem Lagerverwaltungssystem ausgetauscht werden können.

3. Verfahren nach Anspruch 2,
**dadurch gekennzeichnet,**
**dass** die anzufahrende Zielposition (10) von dem Lagerverwaltungssystem empfangen wird.

4. Verfahren nach einem der Ansprüche 2 oder 3,
**dadurch gekennzeichnet,**
**dass** durch das Lagerverwaltungssystem an den Steuerungscomputer Informationen über die Position weiterer Flurförderzeuge (8) übermittelt werden und, wenn ein weiteres Flurförderzeug (8) sich auf dem Anfahrweg (9) befindet, ein alternativer Anfahrweg berechnet wird, oder ein Hinweis auf die Position des weiteren Flurförderzeugs (8) angezeigt wird.

5. Verfahren nach einem der Ansprüche 2 bis 4,
**dadurch gekennzeichnet,**
**dass** durch das Lagerverwaltungssystem an den Steuerungscomputer Informationen über die Position von abgestellten Transportgütern übermittelt werden und die Position der Transportgüter bei der Berechnung des Anfahrweges (9) berücksichtigt wird.

6. Verfahren nach einem der Ansprüche 2 bis 5,
**dadurch gekennzeichnet,**
**dass** durch das Lagerverwaltungssystem abhängig von den Positionen weiterer Flurförderzeuge eine anzufahrende Zielposition an den Steuerungscomputer übermittelt wird.

7. Verfahren nach einem der Ansprüche 1 bis 6,
**dadurch gekennzeichnet,**
**dass** der Steuerungscomputer eine Karte des Fahrbereichs (1) des Flurförderzeugs (7) abgespeichert hat.

8. Flurförderzeug, das eine Ortungsvorrichtung zur Ermittlung der Position des Flurförderzeugs, eine Anzeigevorrichtung zur Darstellung von Informationen für den Fahrer und einen mit der Ortungsvorrichtung und der Anzeigevorrichtung verbundenen Steuerungscomputer aufweist, **dadurch gekennzeichnet, dass** ein Verfahren nach einem der Ansprüche 1 bis 7 durchgeführt wird.

9. Lagersystem mit einem Lager (1), einem Lagerverwaltungssystem und zumindest einem Flurförderzeug (7) nach Anspruch 8, wobei das Lagerverwaltungssystem und das zumindest eine Flurförderzeug (7) ein Verfahren nach einem der Ansprüche 1 bis 7 durchführen.

10. Lagersystem nach Anspruch 9,
**dadurch gekennzeichnet,**
**dass** Informationen über die Position von dem Flurförderzeug (7) an das Lagerverwaltungssystem übertragen werden können; um Lagereinrichtungen zu bedienen, insbesondere Tore (6).
